# EUROPEAN PATENT APPLICATION

(11) **EP 1 267 468 A2**
(43) Date of publication of application: **18.12.2002**
(21) Application number: 02253990.2
(22) Date of filing: 07.06.2002
(51) Int. Cl.: H02H 9/04, H02H 3/04

(54) **Surge protective device**

(30) Priority: 15.06.2001 ZA 200104929
(71) Applicant: CIRCUIT BREAKER INDUSTRIES LIMITED, Elandsfontein (ZA)
(72) Inventor: Van Der Walt, Pierre Etienne, Pretoria (ZA)
(74) Representative: Powell, Timothy John

(57) **Abstract**

A surge protective device is provided for protecting a load connected to a main supply having at least one live phase and a neutral. A first surge protective element such as an MOV is connected between the live phase and earth. A second surge protective element is connected between the neutral and earth. Indicators are provided to indicate correct functioning of the surge protective elements. In the case of the second surge protective element, the indicator is connected in series between the live phase (or another live phase) and the neutral via a thermally operated switch, which also operates to disconnect the surge protective element from the neutral when the surge protective element overheats. This arrangement ensures reliable functioning of the indicator which monitors the surge protective element connected to the neutral.

## Description

### BACKGROUND OF THE INVENTION

THIS invention relates to a surge protective device for protecting a load connected to a mains supply.

Surge protective devices comprising metal oxide varistors (MOVs) or other non-linear surge protective elements are frequently used in domestic and commercial electrical installations in order to protect loads such as computers, electronic equipment and other voltage-sensitive circuits, for example.

One disadvantage of MOVs is that they tend to degrade with use and then begin to draw a substantial leakage current under normal operating conditions. This current heats the MOV and eventually drives it into so-called "thermal runaway". When this happens, the MOV may reach temperatures high enough to ignite and to burn the casing of the protective circuitry, which clearly constitutes a fire hazard. It is thus desirable to have a mechanism to disconnect a faulty MOV and an indicator which indicates whether the MOV is functioning correctly or not.

Whether the mains supply is single or multi-phase, it is desirable to have an indicator for each live phase as well as the neutral of the supply. In the case of the live phases, it is relatively simple to arrange for an indicator to be powered by the live phase and to indicate both the status of the surge protective element and the presence of a normal voltage on that phase. However, in the case of an indicator which monitors the surge protective element on the neutral, the problem is that the neutral voltage is relatively low and does not necessarily operate the indicator reliably.

It is in object of the invention to provide a surge protective device with reliable indication of the status of the surge protective element on the neutral.

### SUMMARY OF THE INVENTION

According to the invention there is provided a surge protective device for protecting a load connected to a mains supply having at least one live phase and a neutral, the surge protective device comprising a surge protective element connectable to the neutral of the supply, an indicator arranged to indicate correct functioning of the surge protective element, and a thermally operated switch arranged so that the indicator is connectable between said at least one live phase and the neutral via the switch, the switch being operable to disconnect the surge protective element from the supply and to disable the indicator in the event of overheating of the surge protective element.

The thermally operated switch is preferably connected between the neutral on the one hand, and the indicator and the surge protective element on the other hand, the surge protective element being connected between the neutral and earth via the switch, so that opening of the switch disconnects the surge protective element from the neutral and also disconnects the indicator from the neutral.

Preferably, the thermally operated switch comprises a resilient conductor connected to a terminal of a surge protective element via a heat sensitive material, so that heating of the surge protective element beyond a predetermined temperature causes melting of the material and disconnection of the resilient conductor.

For example, the heat sensitive material may be conventional solder.

The indicator is preferably connected to the neutral via the resilient conductor, in such way that separation of the resilient conductor from the terminal of the surge protective element also disconnects the indicator from the neutral.

In a preferred embodiment, the resilient conductor is a metallic finger which is bent away from a rest position into contact with a terminal of the surge protective element and simultaneously into resilient contact with a terminal of a circuit which includes the indicator, and soldered to the terminal of the surge protective element.

### BRIEF DESCRIPTION OF THE DRAWINGS

- **Figure 1**: is a front view of a surge protective device according to the invention, designed for a single phase installation;
- **Figure 2**: is a side view of the neutral side of the device of Figure 1, showing a surge protective element therein;
- **Figure 3**: is a pictorial view of a resilient contact finger of a thermally sensitive switch of the device;
- **Figure 4a**: is a detail of Figure 3, showing the connection of the thermally sensitive switch to the surge protective element;
- **Figure 4b**: corresponds to Figure 4a, but shows the thermally sensitive switch after disconnection thereof in use; and
- **Figure 5a and b**: are schematic diagrams of the parts of device for protecting the live and neutral sides of an installation.

### DESCRIPTION OF EMBODIMENTS

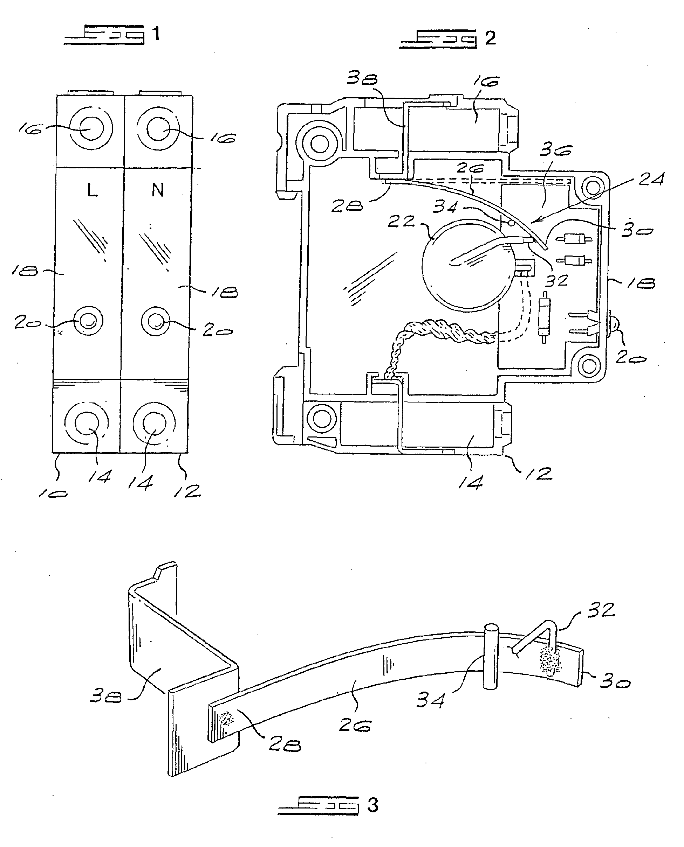

Figure 1 is a front view of a surge protective device according to the invention. The device is intended for a single phase domestic electrical installation, and therefore caters for a single live phase and a neutral line in the mains supply. It will be appreciated that multi-phase embodiments are also possible, in which case each phase or pole of the supply will have its own protective element.

Referring to Figure 1, the device comprises a pair of housings 10 and 12 which are substantially identical. Each housing takes the form of a conventional Mini Rail (trademark) or DIN-compatible miniature circuit breaker.

Each of the housings 10 and 12 has conventional electrical terminals 14 and 16 for connection of earth and line side conductors respectively. On the front face 18 of each housing is an indicator 20 which conveniently takes the form of an LED or similar device. The method of connection of the housings to a mounting device such as a Mini Rail or DIN rail in a distribution box or the like is conventional and is therefore not described in greater detail.

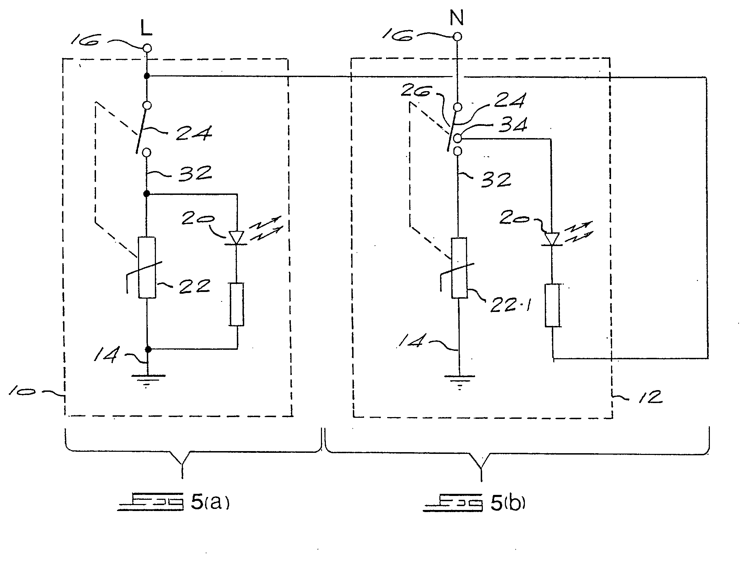

Figure 5 is a schematic diagram for both the live and neutral side of the surge protective device of the invention. On the live side of the device, there is a conventional arrangement comprising a surge protective element in the form of an MOV 22 connected between the live line of the mains supply and earth, to protect a load against voltage surges. A thermally sensitive switch 24 is arranged to respond to heating of the MOV due to fault conditions and to open, removing the MOV from the circuit. This switch arrangement is as described in South African patent application no. 2000/2521. An LED 20 with a series current limiting resistor is connected in parallel with the MOV and therefore is illuminated when the live of the mains supply is present.

When the switch 24 is opened, disconnecting the MOV, the LED indicator is deprived of its power source and is turned off, indicating absence of the supply or a faulty MOV.

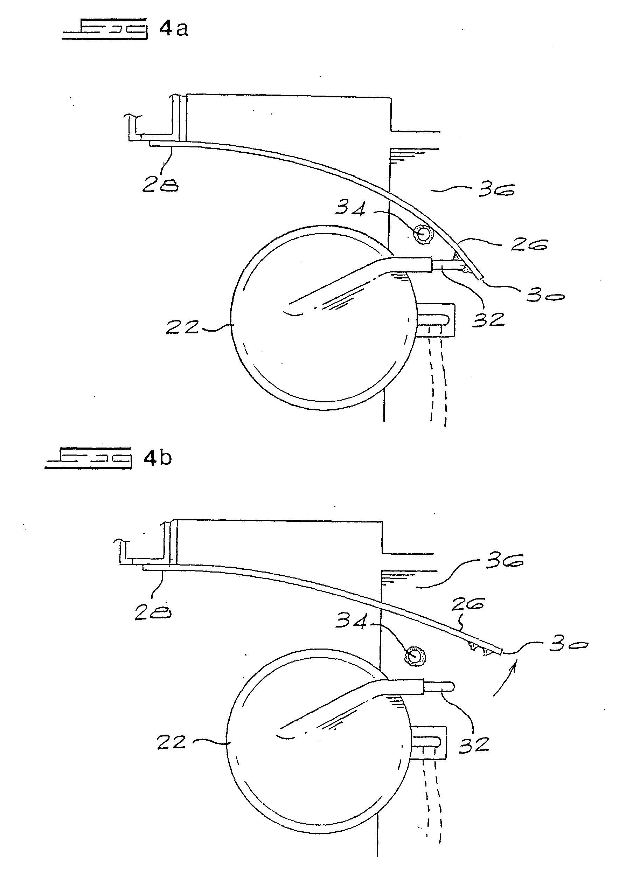

The neutral side of the device will now be described in greater detail. As best seen in Figure 2, a surge protective element 22, which typically comprises a metal oxide varistor (MOV) or another non-linear voltage sensitive device, is connected to an indicator circuit which is built on a circuit board 36.

Essentially, in each case, the MOV 22 is arranged to operate a thermally sensitive switch 24 which is arranged in series between the line terminal 16 and an earth terminal 14 of each part of the device. The switch 24 comprises a resilient metal finger 26 which has a base portion 28 which is connected to the line side terminal 16 via terminal connector 38, and a free end 30.

The finger 26 is formed from metal plate which, in the illustrated embodiment, is approximately 0.4mm thick, and comprises a highly electrically conductive phosphor-bronze alloy. Typically, the finger is about 34mm long and 2.5mm wide. The grain of the phosphor-bronze plate lies in a direction parallel to the long axis of the finger. Instead of phosphor-bronze, another material having similar electrical and mechanical properties could be used.

As best seen in Figure 3, the base portion 28 of the finger is spot-welded to one end of a terminal connector 38, the other end of which connects to the line-side terminal 16. The free end 30 of the finger 26 is bent outwardly into contact with one of the conductive legs 32 of the MOV 22, and soldered into position. Thus, the finger 26 is under tension when connected to the MOV. The solder used is typically a lead-tin resin-cored flow solder alloy, and is formulated to melt at temperatures of between 180°C and 200°C, and in particular from 183°C to 186°C.

A conductive pin 34, which is connected to the indicator LED 20, is mounted on the circuit board 36 and is located so that the finger 26 is brought into resilient contact therewith when the end 30 of the finger is soldered to the leg 32 of the MOV. A conductive paste can optionally be used to enhance the contact between the pin 34 and the finger 26.

As can be seen from the schematic circuit diagram of Figure 5b, the MOV 22 protecting the neutral is connected in use between the neutral conductor and earth, via the normally-closed thermally sensitive switch 24.1 formed by the above described arrangement. In normal use, the MOV 22 is nonconducting, but acts to limit voltage spikes which might otherwise be transmitted to loads connected to the surge protective device, by conducting current to earth.

When the MOV 22.1 is functional and the mains supply is present, the LED 20 is effectively connected between the live and neutral phases and is illuminated.

In the event of a serious fault which overheats and destroys the MOV 22.1, or in the event of the MOV 22.1 deteriorating or becoming faulty and exhibiting thermal runaway due to excessive leakage current, the resulting heating of the MOV will cause the soldered joint between the conductor 32 and the end 30 of the conductor 26 to melt when the melting point of the solder is reached. When this happens, the resilient finger springs back to its rest position (indicated by the dotted outline in Figure 2), and simultaneously disconnects from both the MOV conductor 32 and the pin 34. In other words, the normally-closed switch 24 opens.

This has two effects. Firstly, the connection between the line-side terminal 16 and the MOV 22.1 is broken, isolating the MOV from the supply neutral. Secondly, the power supply path for the LED 20 between live and neutral is interrupted, so that the LED 20 turns off. This serves as a warning to a user of the device that there is a fault, either in that the mains supply is absent, or in that the MOV 22 is faulty.

Thus it can be seen that the live and neutral sides of the device make use of a similar thermally sensitive switch 24, but that the contact arrangement for the neutral side is more sophisticated.

On the live side of the device shown in Figure 5a, the arrangement can be simpler, as both the LED 20 and MOV 22 are connected to the same contact 32, and both are disconnected when the switch 24 opens. If the switch is open or if the live phase is dead, the LED 20 will be turned off.

The invention provides a simple mechanism for ensuring that the requirement for a surge protective device to monitor its own operation is met reliably and simply, such that each pole of the supply, including the neutral where applicable, has its own independent visual indicator and monitor. Unreliable indication of the status of the surge protective device on the neutral is avoided.

It will be appreciated that the above described thermally sensitive switch and contact mechanism, illustrated in Figures 2 and 3, could readily be altered, but essentially relies on a first resiliently biased contact member opening a set of contacts when a predetermined temperature is reached, and simultaneously opening at least one other set of contacts.

## Claims

1. A surge protective device for protecting a load connected to a mains supply having at least one live phase and a neutral, the surge protective device comprising a surge protective element connectable to the neutral of the supply and an indicator arranged to indicate correct functioning of the surge protective element, **characterised in that** the device includes a thermally operated switch arranged so that the indicator is connectable between said at least one live phase and the neutral via the switch, the switch being operable to disconnect the surge protective element from the supply and to disable the indicator in the event of overheating of the surge protective element.

2. A surge protective device according to claim 1 **characterised in that** the thermally operated switch is connected between the neutral on the one hand, and the indicator and the surge protective element on the other hand, the surge protective element being connected between the neutral and earth via the switch, so that opening of the switch disconnects the surge protective element from the neutral and also disconnects the indicator from the neutral.

3. A surge protective device according to claim 1 or claim 2 **characterised in that** the thermally operated switch comprises a resilient conductor connected to a terminal of the surge protective element via a heat sensitive material, so that heating of the surge protective element beyond a predetermined temperature causes melting of the material and disconnection of the resilient conductor.

4. A surge protective device according to claim 3 **characterised in that** the heat sensitive material is solder.

5. A surge protective device according to claim 4 **characterised in that** the solder has a melting point of between 180°C and 200°C.

6. A surge protective device according to claim 5 **characterised in that** the solder has a melting point of from 183°C to 186°C.

7. A surge protective device according to any one of claims 3 to 6 **characterised in that** the indicator is connected to the neutral via the resilient conductor, in such way that separation of the resilient conductor from the terminal of the surge protective element also disconnects the indicator from the neutral.

8. A surge protective device according to claim 7 **characterised in that** the resilient conductor is a metallic finger which is bent away from a rest position into contact with a terminal of the surge protective element and simultaneously into resilient contact with a terminal of a circuit which includes the indicator element, and soldered to the terminal of the surge protective element.
